Europäisches Patentamt

European Patent Office

Office européen des brevets

(19)

(11) **EP 0 865 371 B1**

(12) **FASCICULE DE BREVET EUROPEEN**

(45) Date de publication et mention
de la délivrance du brevet:
**21.06.2000 Bulletin 2000/25**

(51) Int Cl.⁷: **B60S 1/10**

(21) Numéro de dépôt: **96931875.7**

(22) Date de dépôt: **19.09.1996**

(86) Numéro de dépôt international:
**PCT/FR96/01458**

(87) Numéro de publication internationale:
**WO 97/10977 (27.03.1997 Gazette 1997/14)**

(54) **ACTIONNEUR POUR ESSUIE-VITRE DE VEHICULE FERROVIAIRE ET ANALOGUE**

SCHEIBENWISCHER-BETÄTIGUNGSVORRICHTUNG FÜR SCHIENENFAHRZEUGE UND
DERGLEICHEN

WINDSCREEN WIPER ACTUATOR FOR RAILWAY VEHICLES AND THE LIKE

(84) Etats contractants désignés:
**DE ES GB IT**

(30) Priorité: **20.09.1995 FR 9511132**

(43) Date de publication de la demande:
**23.09.1998 Bulletin 1998/39**

(73) Titulaire: **Brot G. Sociéte
92600 Asnières (FR)**

(72) Inventeurs:
• **PEYRONNET, Philippe
F-95870 Bezons (FR)**
• **CHARLIER, Gilles
F-95220 Herblay (FR)**

(56) Documents cités:
**FR-A- 2 426 597       US-A- 2 632 196
US-A- 4 251 898       US-A- 5 271 121**

## Description

La présente invention a pour objet un actionneur pour essuie-vitre de véhicule ferroviaire et analogue, plus particulièrement pour les grandes vitesses voisines des 300 km/h et plus. Elle se situe dans le cadre de l'évolution de l'esthétique et du confort technique qu'ont suivie les cabines des motrices sur le plan de l'ergonomie, des pupitres de commande et de l'aérodynamisme des voitures.

Aux grandes vitesses, la configuration de la cabine de pilotage est adaptée aux diverses circonstances rencontrées : pluie, vent, rafales de vent, impacts accidentels d'oiseaux et/ou d'insectes sur la vitre, engendrant des salissures sur celle-ci. Il en résulte la nécessité d'adapter les caractéristiques cinématiques de l'essuie-vitre à ces phénomènes imprévisibles, mais relativement fréquents.

Les essuie-vitres prévus pour les véhicules à grande vitesse utilisent l'énergie pneumatique pour réaliser un mouvement alternatif de va-et-vient d'un bras porte-balai et d'un balai. Au-delà de 300 km/h, une double augmentation apparaît : d'une part, le couple instantané nécessaire au fonctionnement est plus important ; d'autre part, l'ensemble bras/balai présente une énergie cinétique plus grande qui doit être absorbée à l'angle maximum, lors de l'inversion de sens.

L'invention a pour but de réduire les effets de déformation élastique et le phénomène de fatigue alternée que subit l'ensemble précité. En effet, l'actionneur pour essuie-vitre de véhicule ferroviaire et analogue selon l'invention utilise l'énergie pneumatique pour réaliser, avec un piston mû à l'air comprimé, un mouvement alternatif de va-et-vient d'un bras porte-balai et d'un balai sur la vitre, et ce, sur des plages très étendues de vitesses. Ce mouvement est conçu pour permettre l'absorption, à la position angulaire d'inversion du sens de balayage, de l'énergie cinétique totale de l'ensemble de balayage, sans déformation permanente de ce dernier.

L'état de la technique relatif aux dispositifs actionneurs pour essuie vitre ferroviaires et analogues, peut être valablement illustré par le document US-A-5 271 121 au nom de DOLEGOWSKI qui décrit un système d'actionnement pour balayer une vitre, faisant usage d'une alimentation en air comprimé permettant le fonctionnement d'un moteur pneumatique (10, 10' ) animé d'un mouvement de va et vient commandé électroniquement.

Les moyens mis en oeuvre pour la commande électronique comportent un capteur à effet Hall et une valve (30) de mise en communication avec l'atmosphère qui commande la vitesse d'échappement. Cette valve (30) ne fait pas partie intégrante de l'actionneur (10, 10') et son mode de fonctionnement concret n'est pas explicité dans le document.

L'invention à pour objet un actionneur pour essuie vitre ferroviaire et analogue comprenant un vérin pneumatique (piston - cylindre) tel que repris dans la revendication 1. Le résultat essentiel de la mise en oeuvre de l'appareil selon l'invention est une longévité accrue de l'équipement accompagnée d'une meilleure fiabilité, constante dans le temps.

Pour parvenir à ce résultat, l'actionneur selon l'invention est commandé par un dispositif comportant deux ensembles distincts : le premier n'assurant aucune fonction pneumatique et délivrant uniquement des signaux électriques de commande ; le second comportant un piston pneumatique alternatif, une interface pneumatique et un module électropneumatique. Dans la disposition selon l'invention, les commandes peuvent être faites par traitement de signaux émanant de capteurs de vitesse angulaire et d'angle de balayage.

L'apparition des très grandes vitesses a eu pour conséquence que l'entre axe de bras est passé, par exemple pour le TGV Trans-Manche, de 350 à 1000 mm, la longueur des balais passant de 300 à 900 mm.

L'actionneur pour essuie-vitre ferroviaire ou analogue selon l'invention est du type divulgué par US-A-5 271 121 et est défini par la revendication 1. Il comporte différentes parties formées de modules indépendants connectés entre-eux par des liaisons pneumatiques et/ou électriques rapidement débranchables rendant le dépannage rapide et l'immobilisation des véhicules très brève.

L'actionneur selon l'invention a pour particularité qu'une commande électronique est associée à une distribution électropneumatique qui peut être une commande "tout ou rien" permettant l'amortissement pneumatique par pas séquentiel ; les paramètres d'amortissement étant réglés pour chaque type de cabine, dans les conditions extrêmes.

De plus, la commande électronique associée à la distribution pneumatique peut être de type analogique permettant un amortissement en continu de l'énergie cinétique de l'ensemble de balayage en fonction des conditions d'utilisation ; un mini-calculateur recevant comme variable-d'état la mesure de la vitesse angulaire du bras, sur base de laquelle un algorithme de régulation (par exemple de type P.I.D.) permet l'optimisation du mouvement de l'ensemble de balayage par un choix correct et continu de l'angle à partir duquel l'inversion du mouvement du piston doit débuter et ensuite être altérée.

Dans le cas d'une commande de type analogique, on peut assurer le réglage en continu de la fréquence en même temps que celui de la vitesse de déplacement lors d'un battement du bras-balai, tout en étant en mesure de réaliser des séquences différentes de balayage.

Par ailleurs, une position "PARKING" est prévue, maintenue pendant l'arrêt du balayage et permet, lors de sa mise en route, d'éviter la discontinuité de passage de l'arrêt au mouvement due à la mise en pression des deux chambre pneumatiques du cylindre ; ces dernières pouvant directement entrer en fonction dès la mise en service des circuits de la cabine . L'actionneur pour essuie-vitre ferroviaire et analogue selon l'invention utilise donc une énergie pneumatique correctement mise en oeuvre, à un moment calculé, pour réaliser, à l'aide d'un piston, le mouvement alternatif de va-et-vient d'un bras porte-balai et d'un balai sur la vitre, et ce, pour des plages étendues de vitesses de balayage et de vitesses de déplacement des véhicules ferroviaires ou analogues.

Dans cet actionneur, le piston se déplace en étant asservi aux modules de commande et de distribution et il est interchangeable, lors du choix des caractéristiques de l'actionneur, selon les diverses puissances dont on souhaite disposer pour assurer le va-et-vient de l'ensemble de balayage.

L'actionneur selon l'invention est remarquable en ce que la commande électronique associée à la distribution électropneumatique peut être une commande "tout ou rien". Le réglage de la commande est fait, pour chaque type de cabine, en envisageant des conditions extrêmes. L'usage d'une telle commande "tout ou rien" ne comporte cependant, en soi, aucune particularité et l'on sait d'ailleurs qu'il est connu, par exemple, dans le brevet français FR-A-2516461 (P.MOLET), d'utiliser un bras articulé sur un axe pour le presser contre le parebrise à l'aide d'un ressort. Dans ce brevet, on emploie un dispositif hydraulique de réglage pour commander la pression exercée sur le bras et l'on n'envisage pas d'utiliser l'énergie pneumatique ou hydraulique présente dans un cylindre pour commander la marche de l'essuie-vitre proprement dit.

Par contre, dans le cas de l'entraînement de l'essuie-vitre par un moteur électrique, la demande de brevet allemand publiée sous la référence DE-4341844 A1 (G. KITTAG) a trait à un dispositif de commande avec un capteur et un système électronique de comparaison de deux nombres de tours émanant de deux capteurs différents. Toute différence significative décelée lors de la comparaison est répercutée sous forme de signal de commande au moteur électrique d'entraînement de l'ensemble de balayage.

Ce dispositif est plus qu'une commande d'entraînement car son but est d'éviter les chocs de fin de course qui résultent des variations de vitesse du véhicule lors de son déplacement.

Plus élaboré est le dispositif de commande de l'entraînement de balai d'essuie-vitre selon le brevet EP-A-492693 (General Motors Corp.) qui comporte un capteur détecteur de pluie et un contacteur de commande qui, agissant en conjonction, permettent de déterminer des cycles opératoires.

Dans le brevet américain US-A-5287585 (Aisin Seioki Kabishiki Kaisha Kariya), on décrit un essuie-vitre dans lequel les positions d'élongation angulaire maxima sont modifiées à grande vitesse par une disposition purement mécanique comportant un moteur associé à un engrenage et une came et démarrant aux grandes vitesses de déplacement du véhicule de façon à assurer une variation angulaire des positions de fin de course assez large en fonction du profil de la came. De ce fait, les sollicitations mécaniques auxquelles sont soumis les bras (25, 28) du balai et le moteur (26) -(fig. 3 du document)- de type non spécifié, sont moindres. Un dispositif du même genre est connu par US-A-5226200 (General Motors Corp.).

Comme on le voit, l'association des possibilités des techniques de la pneumatique et de la commande électronique optimale pour une interface pneumatique de régulation d'un piston d'entraînement d'un essuie-vitre n'est pas réalisée jusqu'à présent de façon délibérée dans le but d'optimiser le fonctionnement et la cinématique du mécanisme d'essuie-vitre.

Le but de la présente invention est précisément de mettre systématiquement en oeuvre une combinaison efficace de ces techniques.

D'autres buts, avantages et particularités du dispositif actionneur d'essuie-vitre selon la présente invention sont donnés à titre purement illustratif et non limitatif par les dessins annexés suivants :

La figure 1 est une vue en perspective de l'ensemble du dispositif.

La figure 2 est une vue de la partie supérieure de l'ensemble où l'on distingue nettement les conduites (C1, C2 et C3) de transport de l'air comprimé actionnant le piston de commande de l'essuie-vitre ; la conduite (C4) servant à l'alimentation en liquide du lave-glace incorporé au bras-balai.

La figure 3 est une coupe longitudinale de l'ensemble, dans laquelle le piston et la biellette conjugués réalisent le mouvement de va-et-vient du bras-balai, et ne représentent qu'une possibilité de la transformation du mouvement alternatif en un mouvement rotatif.

La figure 4 est une coupe transversale passant par l'axe de commande du bras-balai.

La figure 5 est une représentation globale du distributeur d'air comprimé lorsque l'actionneur d'essuie-vitre est en position opératoire de balayage.

Les figures 6a et 6b montrent respectivement le distributeur d'air comprimé lorsque l'actionneur d'essuie-vitre est :

6a en position "aller, départ",
6 b en position "aller, arrivée".

Les figures 7a et 7b montrent respectivement le distributeur d'air comprimé lorsque l'actionneur d'essuie-vitre est :

7a en position "retour, départ",
7b en position "retour, arrivée".

Les figures 8 a et 8b montrent respectivement le distributeur d'air comprimé lorsque l'actionneur d'essuie-vitre est :

8a en position "secours, gauche",
8b en position "secours, droite".

La figure 9 représente le module électronique coordonnant, commandant et supervisant l'ensemble des opérations pneumatiques nécessaires à un balayage régulier et non générateur d'efforts qui provoquent l'usure prématurée des composants mis en oeuvre.

Sur les différentes figures, les mêmes éléments mécaniques et/ou électriques sont repris avec des références numériques identiques. En particulier, sur l'ensemble des figures, la source d'énergie pneumatique est symbolisée par le point de référence (14). Il correspond, en application ferroviaire, à l'alimentation en air comprimé présente sur tous les convois et dont les caractéristiques (pression de 7 à 9,5 bars, siccité, etc), sont sensiblement identiques sur les différents réseaux. Il n'en sera par conséquent plus question dans la suite.

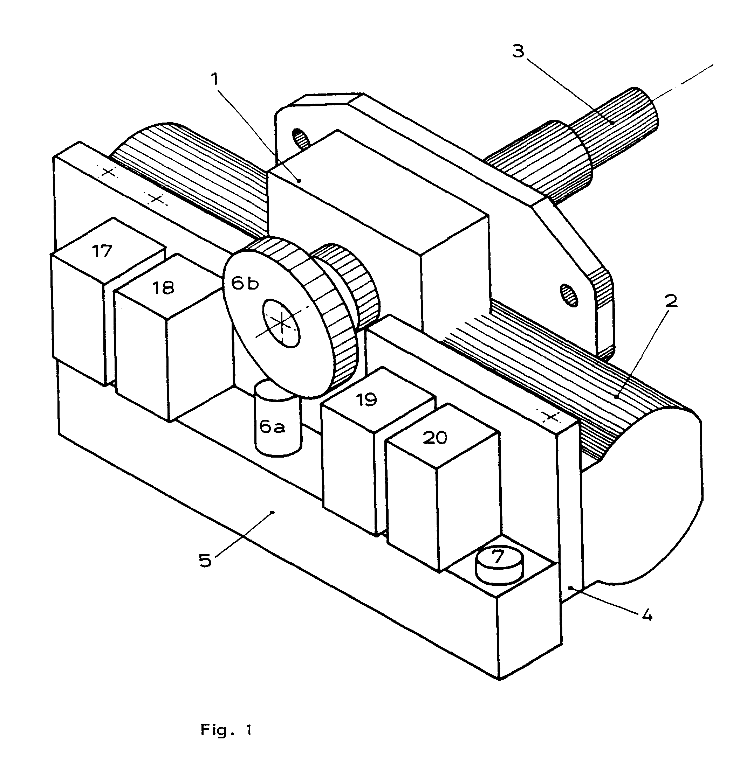

La figure 1 représente en vue perspective l'ensemble du dispositif actionneur d'essuie-vitre (1). Il est essentiellement composé d'un carter de cylindre (2), d'un axe actionneur (3), d'une interface pneumatique (4) et d'un module électropneumatique (5) comportant quatre électrovalves (17, 18, 19 et 20). L'ensemble capteur (6) nécessaire au fonctionnement de l'actionneur est situé entre les électrovalves. Il comporte un détecteur (6a) et une came (6b) en forme de disque qui présente un bord discontinu dont le développement correspond exactement à l'amplitude nécessaire pour que l'inversion du mouvement du piston s'effectue à l'instant qui permettra d'obtenir une annulation progressive de l'énergie cinétique en fin de course. Cette amplitude se détermine expérimentalement.

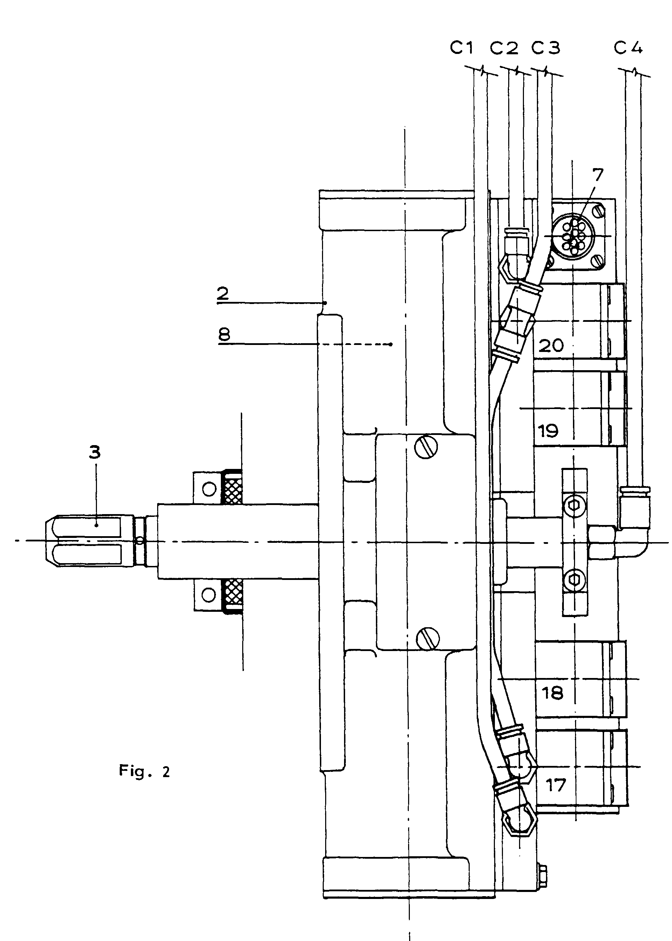

Sur la figure 2, on peut aisément repérer le carter (2) du piston au travers duquel passe l'axe (3) perpendiculairement auquel le piston (8), situé dans le carter et non visible sur cette figure, se déplace.

Quatre conduits d'amenée et de retour de fluides sons représentés : les trois conduits (C1, C2 et C3) sont destinés à l'alimentation du cylindre en air comprimé et à son évacuation. Le conduit (C4) sert à alimenter, à travers l'axe (3) du bras-balai, le liquide de lavage de vitre distribué le long de la raclette en caoutchouc du balai proprement dit (ces deux dernières pièces ne sont pas illustrées). Le raccordement de la partie électrique de l'ensemble est assuré par le point d'alimentation (7).

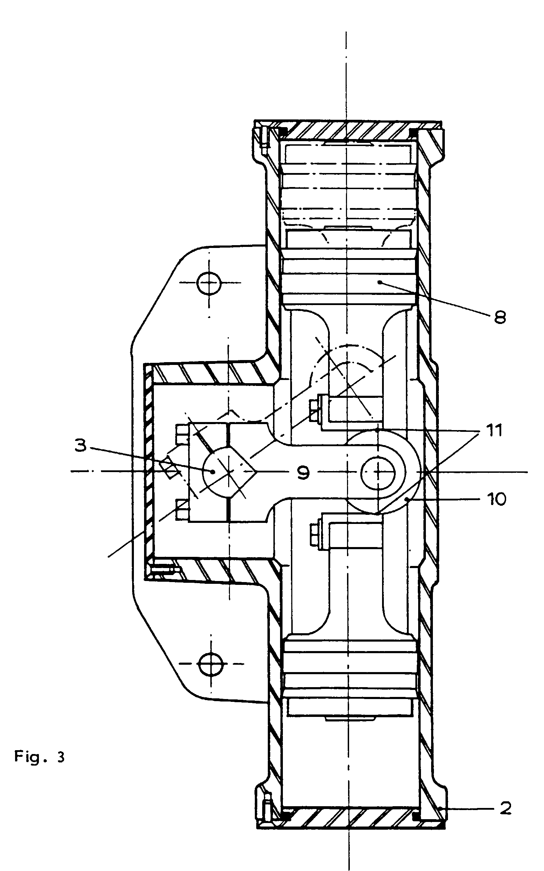

La figure 3 illustre l'action conjuguée du piston (8) et de la biellette (9) dont une des extrémités est un galet de forme adéquate (10) monté sur un palier libre qui est en contact avec les deux surfaces de glissement (11) faisant partie de la tige du piston (8).

La position centrale de l'équipage est représentée sur la figure en traits pleins tandis que la position de fin de course du côté droit est indiquée en traits discontinus.

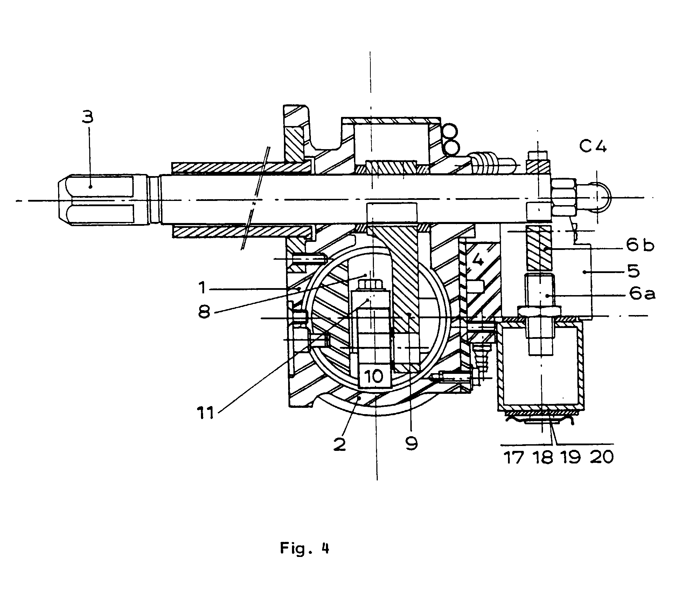

Les mêmes éléments : piston (8), biellette (9), galet (10) et surfaces de glissement (11), sont représentés, ainsi que le carter (2), à la figure 4. Cette dernière montre une coupe transversale faite dans l'axe (3). Extérieurs au carter (2), on notera l'interface pneumatique (4), le module électropneumatique (5), le détecteur (6a) et la came (6b) ainsi que les autres composants déjà repris ci-dessus.

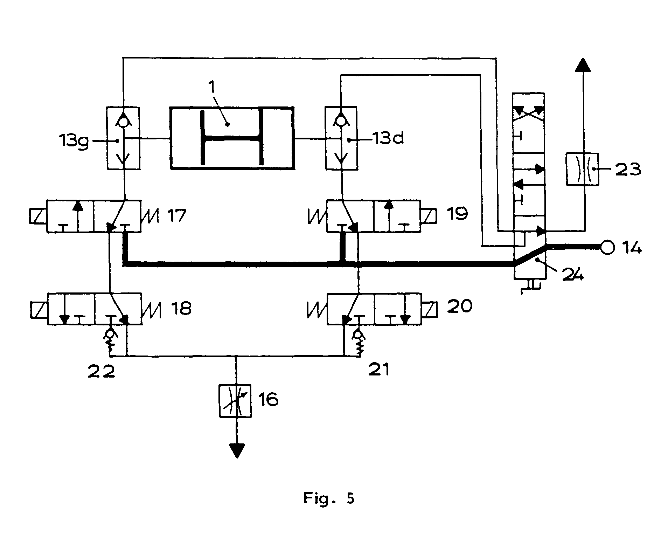

Comme on peut le voir sur la figure 5, l'interface pneumatique est en fait constituée d'un vérin ou tiroir pneumatique (1) aux extrémités duquel les sélecteurs de circuit de gauche et de droite (13g et 13d) sont disposés. Quatre électrovalves 3/2 monostables (17, 18, 19 et 20) sont placées symétriquement et assurent la séquence opératoire correcte du balayage en prenant, dans un ordre et une amplitude définis, des positions qui sont, soit des positions d'admission, soit des positions d'échappement. Le détecteur (6a), que l'on peut voir en se reportant à la figure 1, définit l'ouverture des valves en agissant sur le circuit électromagnétique d'excitation de la valve.

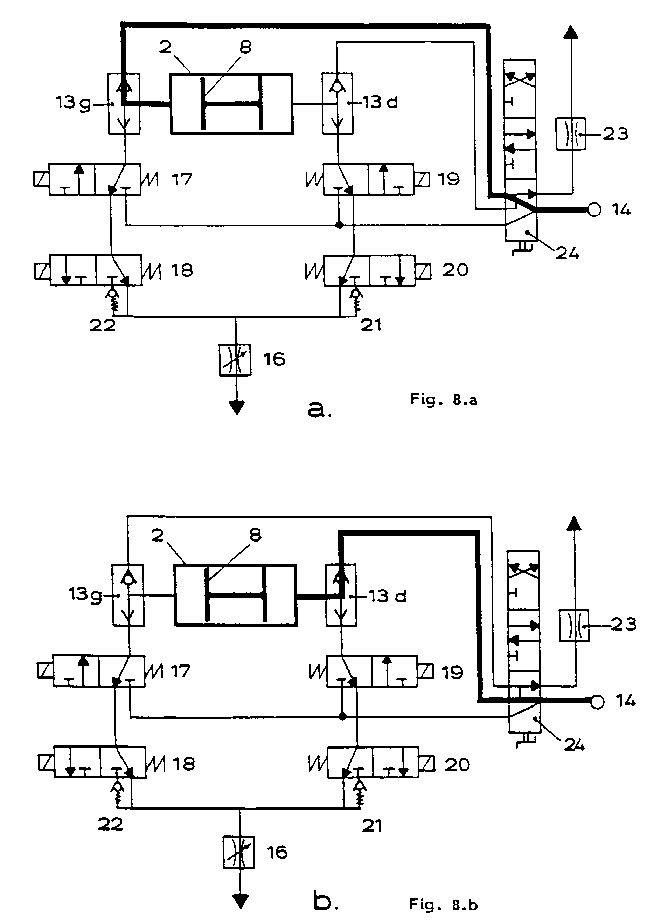

Il est envisageable d'utiliser des électrovalves à ouverture proportionnelle, ce qui permet de gérer la vitesse de balayage à l'intérieur d'un cycle à partir d'un capteur analogique. Le circuit électropneumatique peut être suppléé en fonction "SECOURS" par le distributeur tristable (24) et le régulateur de débit (23) visibles à la figure 8, pour assurer une assistance immédiate au conducteur de la rame en cas de défaillance imprévue des circuits ordinaires.

L'actionneur d'essuie-vitre pourra, selon les modes opératoires du circuit électropneumatique commandant le vérin (1) d'actionnement du porte-balai, fonctionner en trois états définis par les positions "MARCHE NORMALE", "PARKING" et "SECOURS". Ces différentes positions sont illustrées par les figures 5, 6, 7 et 8.

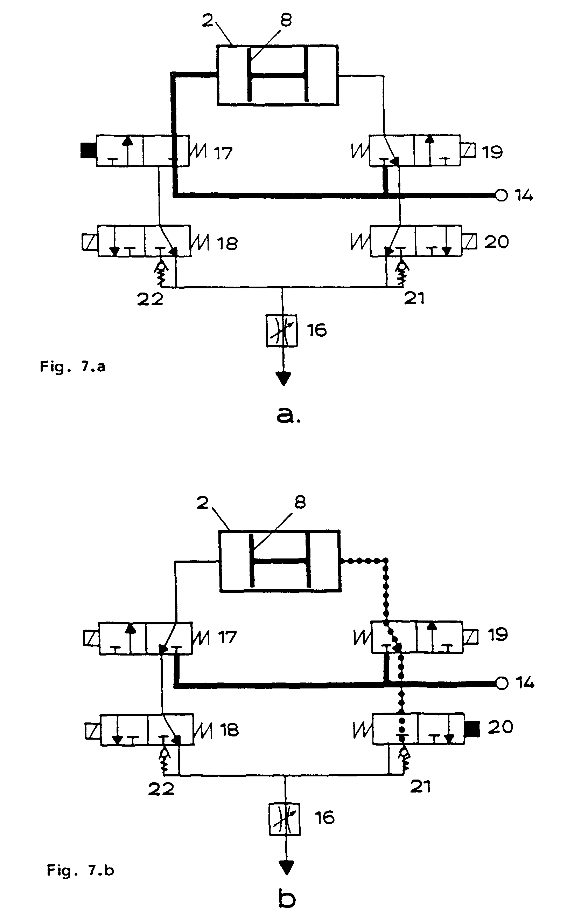

La position "PARKING" (figure 7a) est conçue pour maintenir à l'arrêt l'ensemble de balayage. Elle permet d'éviter les discontinuités du passage de l'arrêt à la mise en mouvement du véhicule ferroviaire ou analogue. La configuration des divers éléments est, en fait, identique à celle qu'ils présentent lorsque l'actionneur est en position "retour, départ". Pour réaliser cette position, on met les électrovalves (17, 18, 19 et 20) respectivement dans les conditions suivantes : l'électrovalve (17) est alimentée, (18) est non opérante, (19) est à l'échappement et (20) est également non opérante : une pression est présente dans le compartiment de gauche du cylindre. Le compartiment de droite est en position d'échappement via le régulateur de débit (16) en transitant par les électrovalves (19 et 20).

Dans un cycle de balayage, c'est-à-dire pendant l'intervalle de temps qui sépare le moment où le balai, ayant des paramètres de vitesse et de position donnés, revient pour la première fois en présentant ces mêmes paramètres, peuvent être distinguées la phase "aller" et la phase "retour".

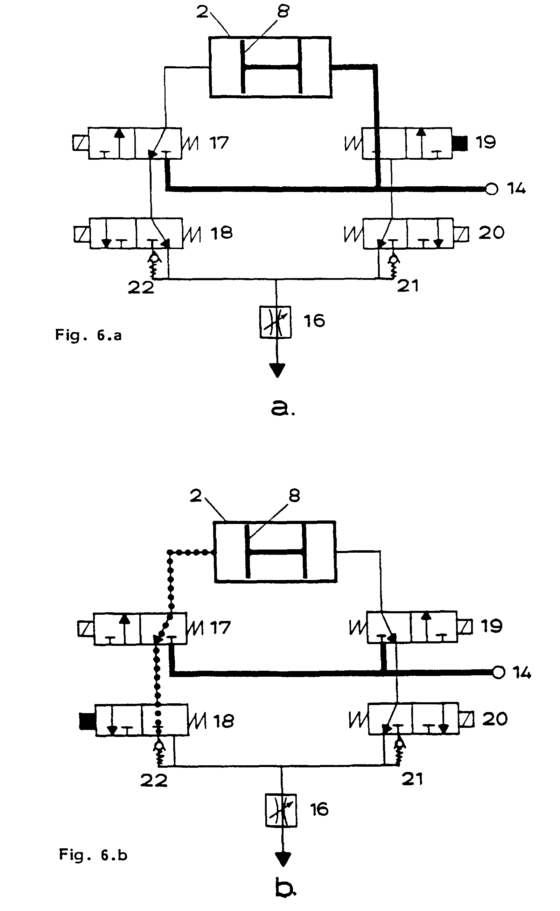

En phase "aller", au départ, comme le montre la figure 6a, on a la configuration suivante : l'électrovalve (17) est fermée en admission mais ouverte en échappement ; l'électrovalve (19) est alimentée, (20) ne l'est pas ; tandis que (18) est à l'échappement vers le régulateur de débit (16).

On comprend dès lors que la pression va croissant dans la partie gauche du cylindre. Dans cette phase "retour, départ" (figure 7a), les états du système sont identiques à ceux de la phase "PARKING" : (17) est alimentée, (18) est non opérante, (19) et (20) sont à l'échappement, vers le régulateur de débit (16). La fin de la phase "aller" se caractérise par un retour à zéro du vecteur vitesse du porte-balai.

L'énergie cinétique totale de l'ensemble porte-balai vaut :

$$Ec = \frac{1}{2} I w^2 \qquad (1)$$

relation dans laquelle I et w ont leur signification habituelle, à savoir : I est le moment d'inertie de l'ensemble actionneur par rapport au centre de rotation et w est la vitesse angulaire. Cette énergie cinétique globale est absorbée comme on l'explique ci-après.

Pour pouvoir s'arrêter au maximum de son élongation angulaire, l'énergie cinétique s'annulant est équilibrée par l'apparition d'une énergie potentielle de manière telle que l'énergie totale est conservée.

Comme on l'a déjà énoncé ci-dessus, l'énergie potentielle qui apparaît dans les systèmes traditionnels est "non contrôlée" et de ce fait ne favorise ni le battement harmonieux de l'actionneur d'essuie-vitre, ni sa longévité. Elle se manifeste par une déformation élastique, ou non, de l'ensemble de balayage qui est soumis inutilement à un couple de torsion pouvant d'ailleurs se transmettre dynamiquement par des forces d'impact sur le galet de l'actionneur.

Ces phénomènes sont d'autant plus défavorables à la durée de vie de l'actionneur d'essuie-vitre qu'ils ont lieu de façon répétitive et alternative. C'est-à-dire que les actions de déformation élastique ou d'usure mises en jeu s'exercent cycliquement, d'abord dans un sens, ensuite, un demi-cycle après, dans le sens vectoriellement opposé et ainsi de suite.

Selon l'invention, on assure la maîtrise de ces phénomènes parasites par la mise en oeuvre progressive d'un échappement partiel dans la chambre de gauche, respectivement de droite, du cylindre. De cette façon, l'effet de freinage sur l'ensemble balai/porte-balai est amorti par une énergie potentielle d'air comprimé égale au produit pc vc (2) où pc et vc sont respectivement les pression et volume résiduels dans la chambre de gauche, respectivement de droite, du cylindre.

En se référant à la figure 6, on se rendra compte que la mise en oeuvre progressive d'un freinage comme décrit ci-dessus est une caractéristique fondamentale de la présente invention : l'électrovalve (18) est alimentée, le freinage dû à l'établissement de l'énergie potentielle en (2) se construit et il serait, si aucune mesure n'était prise, peu efficace car, dans la position extrême (à l'arrivée), l'échappement est libre pour la chambre de droite (fig.6), respectivement de gauche, du cylindre au point que l'on doive maîtriser en réalisant via l'électrovalve (18) (fig. 6b) un échappement partiel étalonné, au moment précis fixé par le signal reçu par le détecteur de position angulaire (6a).

Pour le retour de l'ensemble balai/porte-balai, le déroulement du fonctionnement se fait en inversant, dans la fonction "aller", le rôle des couples d'électrovalves respectifs (17, 18) et (19, 20).

Plus précisément, en se reportant aux figures 5, 6, 7 et 8 on observe : en phase "retour, départ" que : (18) est coupée, (17) est alimentée de sorte que cette électrovalve assure une croissance de la pression dans la chambre de gauche du cylindre.

Par les électrovalves (19 et 20) et via le régulateur de débit (16), l'air sort de la chambre de droite du cylindre.

En phase "retour, arrivée", le schéma est symétrique par rapport au plan médian du cylindre, comparativement au schéma de la phase "aller, arrivée" car les composants sont dans les états suivants :

Les deux électrovalves (19 et 20) sont à l'échappement. L'échappement hors de la partie gauche du cylindre se fait par ces dernières et le régulateur de débit réglable (16). Les deux électrovalves (17) et (18) sont inopérantes et la soupape (21) achemine le flux d'air vers le régulateur de débit réglable (16). La soupape (22) remplit évidemment une fonction symétrique lors de la phase "aller, arrivée".

La fin des phases "retour" se caractérise par un retour à zéro du vecteur vitesse du porte-balai. Une énergie cinétique totale analogue à celle signalée par l'équation (1) est équilibrée par l'apparition d'une énergie potentielle de manière telle que l'énergie totale du système est conservée.

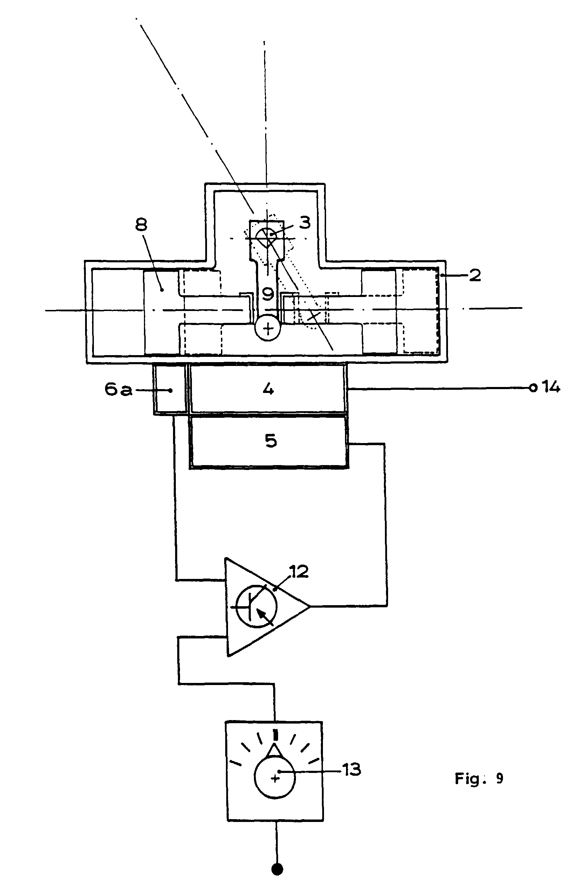

La figure 9 est un schéma reprenant le principe de fonctionnement de tout l'actionneur. Le déplacement du piston est asservi à l'électronique de calcul (12), cette dernière et les ensembles électropneumatiques sont alimentés en courant électrique via un sélecteur de fonctions (13) (marche, arrêt, marche temporisée) sous la tension de 80 Volts usuelle en matériel ferroviaire. Il y a lieu de concevoir que l'ensemble électronique représenté à la figure 9 englobe les cas où la commande du tiroir de mise en rotation serait assujettie aux signaux provenant de plusieurs ensembles capteurs autres que le capteur unique (6a) envisagé ci-dessus. On peut en effet conditionner le déplacement du porte-balai à d'autres paramètres (vitesse du vent, chocs aérodynamiques lors du croisement des véhicules, etc), ces paramètres étant envoyés tous à l'unité de calcul arithmétique préalablement adaptée soit par un programme immuable et résidant, soit par un programme paramétrisable selon les conditions d'emploi de l'essuie-vitre.

Il est clair que le type de configuration de la figure 9 où les trois disciplines : pneumatique, électricité et traitement de données par voie électronique, sont combinées, est applicable à d'autres déplacements de va-et-vient. Ces combinaisons éventuelles font partie du champ d'application de la présente invention.

La même figure 9 montre à souhait combien la disposition des sous-ensembles de l'appareil selon l'invention permet une très grande facilité de détection des pannes et une très grande simplicité de réparation par remplacement momentané ou permanent des sous-ensembles concernés. En termes simples, l'appareil selon la présente invention se présente comme une pluralité de modules dont le fonctionnement, l'interconnexion et le remplacement sont très aisés. Cette caractéristique étant de première importance dans le domaine du transport ferroviaire.

Bien entendu, sans sortir ni du cadre ni de l'esprit de la présente invention, diverses vari tes ou modifications peuvent être apportées à la description que précède, pour autant que l'invention demeure celle fixée par les revendications. Celle-ci a été donnée à titre d'exemple non limitatif.

## Revendications

1. Actionneur pour essuie vitre ferroviaire et analogue comprenant un vérin pneumatique (piston 8, cylindre 2) et des électro-valves (17 à 20), dans le but d'utiliser l'énergie pneumatique pour réaliser à l'aide du vérin pneumatique (2-8) et des électrovalves (17 à 20) un déplacement alterné de va et vient d'un bras porte-balai et d'un balai sur la vitre, pour une plage très étendue de vitesses, caractérisé en ce que l'actionneur est commandé pour permettre l'absorption, à la position angulaire d'inversion du sens de balayage, de l'énergie cinétique totale de l'ensemble de balayage, sans fatigue anormale de l'ensemble en établissant pour l'une et l'autre direction de balayage une énergie potentielle dans le cylindre(2) du vérin pneumatique, énergie potentielle que l'on maîtrise en réalisant via une des électro-valves (18-20) un échappement partiel étalonné au moment précis fixé par un signal reçu par, un détecteur de position angulaire (6a).

2. Actionneur selon la revendication n° 1 pour essuie-vitre ferroviaire ou analogue utilisant l'énergie pneumatique pour réaliser à l'aide d'un piston (8) en translation dans un cylindre (2), un déplacement alterné de va-et-vient d'un bras porte-balai et d'un balai sur la vitre, pour des plages très étendues de vitesses de balayage et de vitesses de déplacement de véhicules ferroviaires ou analogues, caractérisé en ce que l'actionneur (1) réalise l'absorption d'énergie cinétique par une commande basée sur un dispositif comportant deux groupes d'ensembles distincts : le premier groupe délivrant des signaux électriques de commande, le second comportant un vérin pneumatique alternatif et un module électropneumatique (5), les commandes pouvant être faites par traitement de signaux émanant de capteurs de positions angulaires tels que (6a) et éventuellement de vitesses de balayage.

3. Actionneur pour essuie-vitre ferroviaire ou analogue utilisant l'énergie pneumatique pour réaliser, à l'aide d'un vérin pneumatique, un mouvement alternatif de va-et-vient d'un bras porte-balai et d'un balai sur la vitre, pour des plages très étendues de vitesses selon l'une des revendications 1 ou 2, caractérisé en ce que le vérin pneumatique est indépendant des modules de commande et de distribution et est interchangeable soit à des fins d'entretien soit selon les différentes puissances dont on souhaite disposer pour assurer le va-et-vient de l'ensemble de balayage.

4. Actionneur selon l'une des revendications précédentes caractérisé en ce que l'on peut assurer le réglage continu de la fréquence en même temps que celui de la vitesse de déplacement lors d'un battement du bras-balai, tout en étant en mesure de réaliser des séquences différentes de balayage, une position "PARKING" étant prévue.

5. Actionneur pour essuie-vitre selon l'une des revendications qui précèdent caractérisé en ce que l'appareil présente une position "PARKING" conçue pour maintenir à l'arrêt l'ensemble de balayage et pour éviter les discontinuités de passage de l'arrêt à la mise en mouvement du bras-balai ; la configuration des divers éléments en cette position étant identique à celle qu'ils présentent lorsque l'actionneur est en position "retour, départ", c'est-à-dire : les électrovalves (17, 18, 19 et 20) sont respectivement dans les conditions suivantes : l'électrovalve (17) est alimentée, (18) non opérante, (19) à l'échappement et (20) également non opérante.

6. Actionneur pour essuie-vitre selon la revendication 5 caractérisé en ce qu'en parallèle au circuit normal de fonctionnement, on adjoint un circuit "SECOURS" qui a pour but l'assistance immédiate assurée au conducteur de la rame en cas de défaillance imprévue des circuits ordinaires ; ce circuit comportant deux valves ou soupapes (21, 22) qui ont la fonction de sélectrices de débit, un régulateur de débit non réglable (23) et un distributeur tristable (24) (à trois niveaux de stabilité).

7. Actionneur pour essuie-vitre selon l'une quelconque des revendications qui précèdent caractérisé en ce que la mise en oeuvre des modes opératoires "MARCHE", "SECOURS", et "PARKING" est réalisée par une plurarité de modules dont le fonctionnement, l'interconnexion et le remplacement sont très aisés, cette caractéristique étant de première importance dans le domaine du transport ferroviaire.

**Patentansprüche**

1. Scheibenwischerbetätigungsvorrichtung für Schienenfahrzeuge und dergleichen mit einem pneumatischen Zylinder ( Kolben 8 und zylinder 2) und elektrische Steuerventile (17 bis 20) für den Einsatz pneumatischer Energie für die Hin- und Herbewegung einer Scheibenwischerstange und eines Wischers an der Frontscheibe, mit Hilfe von dem pneumatischen Zylinder (2,8) und von den elektrischen Steuerventilen (17 bis 20) auf eine breite Reihe von Wischersgeschwindigkeiten, dadurch gekennzeichnet dass die Vorrichtung so gesteuert ist dass die gesamte kinetische Energie der Scheibenwischerseinheit, bei dem Rückkehr der Stange, mit einer für die beiden Hin und Herbewegungen in dem Zylinder (2) zunehmenden potential Energie, ohne anormaler Beanspruuchung der Einheit aufgenommen wird, wobei diese potential Energie durch ein der Ventile (18-20) mit geeichten mässigen Luftteilauspuff von einem von dem Sensor (6a) empfangenen Signal gesteuert wird.

2. 1. Scheibenwischerbetätigungsvorrichtung gemäss Anspruch 1; für Frontscheibenwischer der Schienenfahrzeuge und dergleichen mit einem pneumatischen Kolben ( 8) der sich hin and her in einem Zylinder (2) beweget für den synchronisierten Antrieb einer Scheibenwischersstange und eines Wischers auf eine breite Reihe von Scheibenwischer- und Schienenfahrzeug-, oder gleichen-, Geschwindigkeiten dadurch gekennzeichnet dass die Aufnahme der kinetischen Energie mit einer aus zwei Aggregaten bestehenden Einheit geregelt wird: das eine Aggregat liefert elektrische Steuersignale das zweite besteht aus einem hin und her arbeitenden peumatischen Zylinder und einem pneumatischen Modul (5) wobei die Zur Steurerung notwendige Impulssignale nach Empfang von Winkelstellung- bzws Wischerstaktsensoren verarbeitet sind.

3. Scheibenwischerbetätigungsvorrichtung für Schienenfahrzeuge und dergleichen mit Einsatz pneumatischer Energie für die Hin- und Her Bewequing einer Scheibenwischersstange und eines Wischers an der Frontscheibe auf eine breite Reihe von Wischer- und Fahrtgeschwindigkeiten gemäss Anspruch 1 oder 2, dadurch gekennzeichnet dass der pneumatische Zylinder unabhängig von dem Steuer-und Verteilungsmodul ist und dass er von Steuer- und Verteilungsmodul getrennt und austauschbar entweder für WartungsZwecke oder für den richtigen Wahl einer der zur Verfügungstehenden Betätigungsleistungen, montiert ist.

4. Scheibenwischerbetätigungsvorrichtung nach einem der Ansprüche 1 bis 3, dadurch gekennzeichnet dass die Dauerregelung der Frequenz sowie der Hin- und Herbewegungsgeschwindigkeit des Scheibenwischers während des Taktes bewirkt wird und zwar mit verschiedenen sequentielen Abwischerstakten wobei ein Stellung PARKING vorgesehen ist.

5. Scheibenwischerbetätigungsvorrichtung für Schienenfahrzeuge und dergleichen nach einem der Ansprüche 1 bis 4 dadurch gekennzeichnet dass die PARKING Stellung so ausgedacht wird dass der Uebergang vom Stillstand bus zum Starten der Wischersbewegung stetig durchgeführtn wird wobei dir Lage der verschiedenen Komponenten in der 'PARKING' Stellung genau diegleiche ist als in der 'HIN,HER' Stellung dass heisst: die jeweilige elektrische Steuerventile ( 17,18,19,20) sind in der Folgenden Stellung.: Ventil (17) : gespeist; (18): still (19): Auspuff und (20): auch still.

6. Scheibenwischerbetätigungsvorrichtung gemäss Anspruch 5 dadurch gekennzeichnet dass eine 'NOT' Schaltung parallel zu dem normalen Kreis für eine dem Zugführer zu gebenden Hilfe, unter zufällige Unterbrechung des normalen Kreis angeordnet ist, wobei die beiden Elektrische Steuerventile (21,22) dieser Schaltung als Leistungswähler zusammen mit einem festen Luftstrom-bzw.-Leistungsregler (23) und mit einem dreistufigen Verteiler (24) ( d.h. mit drei möglichen Stabilitätsstufen) arbeiten.

7. Scheibenwischerbetätigungsvorrichtung nach einem der oben erwähnten Ansprüche dadurch gekennzeichnet dass die 'HIN', 'NOT' und 'PARKING' Wirkungsweisen mit von Module bewirkt ist so dass der Einsatz, die Miteinanderschaltung und der Ersatz der Komponenten sehr einfach und zugänglich ist, mit entsprechender sehr bedeutender Ueberlegenheit für den Schienenfahrzeugbetrieb

**Claims**

1. Windscreen wiper actuator for railway vehicle and the like comprising a pneumatic jack ( cylinder 2, piston 8 ) and a plurality of solenoïd valves (17 to 20) using pneumatic energy output for reversible left and right motion of the windshield or windscreen wiper arm and of the wiper blade at the surface of the windscreen, over a very wide angular velocity range characterized in that the actuator is driven so as to absorb the overall kinetic energy at the exact location where the angular motion is inverted , thereby preventing the abnormal fatigue of the embodiment by means of the correct bidirectionnal potential energy rise of the wiper system inside cylinder (2) of the pneumatic jack, whereby the potential energy rise is controlled with a calibrated air exhaust at the exact lime given by the signal output of an angular position sensor (6a).

2. Windscreen wiper actuator for railway vehicle and the like as set forth in claim 1, which uses pneumatic energy for the reversible left and right motion of a the wiper arm and of the wiper blade over the surface of the windscreen, over a very wide flip flop velocity range of the wiper and for a large wide travel speed range of the railway vehicles and the like, characterized in that the actuator absorbs the overall kinetic energy by means of a controlled sequence based on a device working with distinct paired control systems: the former system outputting electric control pulses , the latter having a pneumatic alternative motion jack and a electropnematic module (5),whereby the control pulses can be derived by processing the signals issued by the angular position sensor or by processing the angular velocities of the wiper.

3. Windscreen wiper actuator for railway vehicle and the like which uses pneumatic energy by means of a pneumatic jack for the left and right reversible motion of a wiper arm and of a wiper blade over the surface of the windscreen, within a very wide flip flop velocity range of the wiper and for a large wide travel speed range of the railway vehicles and the like, according to one of claims 1 or 2, characterized in that the pneumatic jack is a separate component which is removably connected to the driving- and distribution module for maintenance purposes so as to get various available power output for the alternate left and right motion of the wiper .

4. Windscreen wiper actuator for railway vehicle and the like acoording to anyone of the preceding claims, characterized by a possible continuous frequency control which is gained together with the motion speed control of the blade during one sweep displacement of the wiper arm, whereby various alternate sequential motion can be achieved a 'PARK' position being available.

5. Windscreen wiper actuator for railway vehicle and the like according to anyone of the preceding claims,characterized in that the 'PARK' position of the device is intended to maintaining the sweeping wiper system at the idle state and to avoid discontinuous start-up when the wiper arm is moving off from the idle position, whereby the actual set-up of the various components identically corresponds, in that position, to the configuration that they have when the wiper actuator is in the 'BACK,START' position i.e. the configuration with (17,18,,19,20) solenoïd valves being at the respective following state:- valve is idle-,- valve (17) is supplied,-18 is idle aswell,- and (19) communicates with the exhaust port.

6. Windscreen wiper actuator for railway vehicle and the like according to claim 5,characterized by an 'EMERGENCY'or 'HELP' circuit being associated with the current operating circuit for securing immediate help to the railway vehicle driver in case of malfunctions of the ordinary circuits , wherein the circuit has two valves (21,22,) for flow rate selection, a non-adjustable flow rate controller (23) and a stable three level air distribution unit.

7. Windscreen wiper actuator according to anyone of the preceding claims, characterized in that the "SERVICE", "HELP" and "PARKING "modes or positions are initiated by means of a plurality of operating modules which are interconnectd so as to be easily and reliably operated and replaced for maintenance purposes, this latter characterisics being of paramount importance for managing the Railway Daily Transportation.

Fig. 1

Fig. 2

Fig. 3

Fig. 4

Fig. 5

Fig. 6.a

a.

Fig. 6.b

b.

Fig. 7.a

a.

Fig. 7.b

b

Fig. 8.a

a.

b.

Fig. 8.b

Fig. 9